# EUROPEAN PATENT APPLICATION

(11) **EP 4 574 761 A1**
(43) Date of publication of application: **25.06.2025**
(21) Application number: 23219379.7
(22) Date of filing: 21.12.2023
(51) Int. Cl.: C01B 32/318, B01J 21/18, C01B 32/336, C01B 32/384

(54) **A CARBONISED CARBON COMPOSITION AND AN ACTIVATED CARBON AND A METHOD OF PRODUCING A CARBONISED CARBON COMPOSITION AND AN ACTIVATED CARBON**

(71) Applicant: Act&Sorb B.V., 3600 Genk (BE)
(72) Inventor: AHMAD, Arslan, 3600 Genk (BE); HOGERVORST, Jeroen Lambertus Johannes, 3600 Genk (BE); MBALLA MBALLA, Monique, 3600 Genk (BE); TRICARICO, Maxime, 3600 Genk (BE); TOSI, Claudio, 3600 Genk (BE); VANREPPELEN, Kenny, 3600 Genk (BE)
(74) Representative: Forresters IP LLP

(57) **Abstract**

The present invention relates to a carbonised carbon composition comprising carbonised carbon, a binder and an alkali metal and/or alkali earth metal, and methods of producing the same. In particular, the present invention relates to a carbonised carbon composition comprising carbonised carbon, a binder and an alkali metal and/or alkali earth metal, wherein the binder is one or more sugars, and methods of producing the same. The present invention further relates to an activated carbon, and methods of producing the same.

## Description

### FIELD OF THE INVENTION

The present invention relates to a carbonised carbon composition comprising carbonised carbon, a binder and an alkali metal and/or alkali earth metal, and methods of producing the same. In particular, the present invention relates to a carbonised carbon composition comprising carbonised carbon, a binder and an alkali metal and/or alkali earth metal, wherein the binder is one or more sugars, and methods of producing the same. The present invention further relates to an activated carbon, and methods of producing the same.

### BACKGROUND OF THE INVENTION

Activated carbon has a high surface area. owing to activated carbon being a highly porous material. Typically, activated carbon has a high surface area of greater than 400 m²/g and a porosity of greater than 0.2 ml/g. This makes activated carbon a useful material in methane and hydrogen storage, purification such as air purification and water purification, solvent recovery, decaffeination, sewage treatment and many other applications.

Activated carbon is commonly used for the adsorption of various substances from liquids or gases. This adsorption of substance is particularly useful when using activated carbon for purification and/or filtration.

Activated carbon may additionally be used as a catalyst. Activated carbon is a particularly useful catalyst because activated carbon has a large specific surface area, pore structure and useful surface chemistry. Activated carbon is widely used as a catalyst in (a) the treatment of liquid and/or gases to promote the transformation of compounds such as, but not limited to, hydrogen peroxide, chloramines, chlorinated organic compounds, volatile organic compounds, chlorine and acid gases like hydrogen sulfide, and, (b) for the production of chemicals such as, but not limited to, phosgene and glyphosate. The impact of the surface chemistry of the activated carbon on its catalytic properties is well-recognised. The presence of certain oxygen and nitrogen functional groups on the surface of activated carbon is critical in this context.

The process for making activated carbon usually comprises two steps: pyrolysis (carbonization) followed by an activation step and is well known in the art, as exemplified in US5444031, US2013/0299748, US10518245, US2022/0340818, US2022/0352501 and US2023/0015387.

During pyrolysis, the carbon containing starting material is heated to temperatures of from 500 to 1100 °C in an oxygen deficient atmosphere. During this step, a gaseous intermediate product and a solid intermediate product are obtained. The gaseous intermediate product comprises light gasses and tar, and the solid intermediate product comprises char and solid by-products such as ashes. During the activation step, the solid intermediate product is either activated by exposure to a temperature of at least 800 °C in the presence of steam, or the solid intermediate product is chemically activated by exposure to chemicals such as, but not limited to, phosphoric acid. Chemical activation is typically carried out at temperatures lower than 800 °C. The final product, after activation, is called activated carbon.

A common starting material for making the solid intermediate product and activated carbon is a carbonaceous precursor. The carbonaceous precursor can be, but is not limited to, coconut shell, wood, coal and lignite. The adsorptive and catalytic properties of the resultant activated carbon can be impacted by the choice of carbonaceous precursor, and in particular the nitrogen content of the carbonaceous precursor. For example, a highly activated carbon can be produced if the carbonaceous precursor is rich in nitrogen. Typically, an activated carbon is understood to be "highly" activated when the activated carbon has a hydrogen peroxide decomposition rate parameter (T_{1/4}) of less than 20 minutes.

To further control the catalytic properties of the resultant activated carbon, chemicals may be added during the pyrolysis or the activation step. For example, if an activated carbon has a low carbon content but the carbonaceous precursor and/or solid intermediate product are exposed to a nitrogen containing compound at a high temperature during the pyrolysis and/or activation, to increase the catalytic ability of the resultant activated carbon is increased. Typically, a high temperature in pyrolysis is considered to be a temperature of from 500 to 1100 °C and a high temperature in activation is considered to be at least 800 °C. Examples of nitrogen containing compounds that may be used include, but are not limited to, ammonia, urea and/or melamine.

Unfortunately, the use of nitrogen containing compounds has a number of disadvantages. Firstly, the use of nitrogen containing compounds elevates the overall cost of producing the activated carbon. Secondly, the use of nitrogen containing compounds also poses an environmental and safety hazard due to the potential production of toxic gaseous by-products such as NH₃, NOₓ and hydrogen cyanide. Disadvantages such as these limit the overall usefulness of the resultant activated carbon.

There is therefore a need for the production of an improved activated carbon.

### SUMMARY OF THE INVENTION

The present invention relates to a carbonised carbon composition comprising carbonised carbon, a binder and an alkali metal and/or alkali earth metal, and methods of producing the same. In particular, the present invention relates to a carbonised carbon composition comprising carbonised carbon and a binder and an alkali metal and/or alkali earth metal, wherein the binder is one or more sugars, and methods of producing the same. The present invention further relates to an activated carbon, and methods of producing the same.

The production of the carbonised carbon composition and activated carbon according to the present invention advantageously does not involve the use of unsafe or environmentally hazardous containing compounds.

The activated carbon according to the present invention can be used in, but is not limited to, hydrogen peroxide decomposition, oxidative dehydrogenation of alkane and alkyl compounds, dehydration and dehydrogenation of alcohols, oxidation of acid gases such as NO, SOₓ and H₂S, reduction of NO₂ and NOₓ, dehalogenation and dehydrohalogenation of organo-halogen compounds catalytic decomposition of ozone and catalytic wet air oxidation of phenol or pharmaceutical compounds.

Representative features of the present invention are set out in the following clauses, which stand alone or may be combined, in any combination, with one or more features disclosed in the text and/or figures of the specification.

The present invention is as set out in the following clauses:
1. A carbonised carbon composition, comprising:
   carbonised carbon,
   at least one binder; and
   at least one alkali metal and/or at least one alkali earth metal
   wherein the binder is one or more sugars.
2. The carbonised carbon composition of clause 1, wherein the at least one alkali metal and/or at least one alkali earth metal is potassium.
3. The carbonised carbon composition of clause 1 or clause 2, wherein the one or more sugars is partially or completely inverted sugar.
4. The carbonised carbon composition of any of clauses 1 to 3, wherein the one or more sugars is sourced from sugar cane molasses.
5. The carbonised carbon composition of any of clauses 1 to 4, wherein the carbonised carbon is obtained from carbonising a carbonaceous precursor; optionally, wherein the carbonaceous precursor is MDF (medium-density fibreboard).
6. The carbonised carbon composition of any of clauses 1 to 5, wherein:
   the carbonised carbon is present at from 50 to 85, or, from 60 to 80, or, greater than 65, or, greater than 70, or, less than 80, or, less than 65 weight percent of the total weight of the carbonised carbon composition;
   the binder is present at from 15 to 35, or, from 20 to 30, or, at 25 weight percent of the total weight of the carbonised carbon composition; and/or
   the alkali metal and/or alkali earth metal is present at from 0.01 to 15, or, from 0.05 to 12, or, from 0.01 to 10 weight percent of the total weight of the carbonised carbon composition.
7. Activated carbon, comprising:
   nitrogen at from 0.50 to 5.0 weight percent of the total weight of the activated carbon;
   carbon at from 70.00 to 95.00 weight percent of the total weight of the activated carbon;
   hydrogen at from 0.00 to 1.50 weight percent of the total weight of the activated carbon;
   sulfur at from 0.00 to 1.00 weight percent of the total weight of the activated carbon; and/or
   oxygen at from 1.00 to 6.00 weight percent of the total weight of the activated carbon;
   any balance being unavoidable impurities.
8. The activated carbon of clause 7, wherein the activated carbon comprises:
   nitrogen at from 1.50 to 3.00, or, 1.93 weight percent of the total weight of the activated carbon;
   carbon at from 75.00 to 90.00, or, 84.19 weight percent of the total weight of the activated carbon;
   hydrogen at from 0.20 to 1.00, or, 0.46 weight percent of the total weight of the activated carbon;
   sulfur at from 0.10 to 0.50, or, 0.17 weight percent of the total weight of the activated carbon; and/or
   oxygen at from 3.50 to 5.50, or, 4.27 weight percent of the total weight of the activated carbon;
   any balance being unavoidable impurities.
9. The activated carbon of clause 7 or clause 8 wherein the activated carbon has a minimum hydrogen peroxide decomposition time (T_{1/4}) of less than 45 minutes, or, less than 40 minutes, or, less than 35 minutes, or, less than 30 minutes, or, less than 25 minutes, or, less than 20 minutes.
10. The activated carbon of any of clauses 7 to 9, wherein the activated carbon has a surface area analysis (BET) of from 1500 m²/g or less, or, from 1000 m²/g or less, or, from 800 to 1000 m²/g.
11. The activated carbon of any of clauses 7 to 10, wherein the activated carbon has an iodine number of less than 1500 mgI₂/g, or, less than 1000 mgI₂/g, or, less than 980 mgI₂/g, or, less than 975 mgI₂/g.
12. The activated carbon of any of clauses 7 to 11, wherein the activated carbon has a methylene blue (MB) number of from 5 to 25 gMB/100g, or, from 10 to 20 gMB/100g, or, from 10.5 to 18.3 gMB/100g.
13. The activated carbon of any of clauses 7 to 12, wherein the activated carbon has an apparent density of from 200 to 650 kg/m³, or 300 to 550 kg/m³, or, from 400 to 550 kg/m³, or, from 419 to 458 kg/m³.
14. The activated carbon of any of clauses 7 to 13, wherein the activated carbon has a ball pan hardness of less than or equal to 98 %, or, less than or equal to 95 %, or, less than or equal to 90 %, or, from 70 to 95 %, or, from 85 to 90 %.
15. The activated carbon of any of clauses 7 to 14, wherein the activated carbon is in the form of an extrudate, powder, granules and/or combinations thereof.
16. A method of forming the carbonised carbon composition of any of clauses 1 to 6, the method comprising the steps of:
   (a) providing a carbonaceous precursor;
   (b) subjecting the carbonaceous precursor to pyrolysis to form a solid intermediate product;
   (c) providing a binder; and
   (d) mixing the solid intermediate product with the binder to form the carbonised carbon composition.
17. The method of clause 16, wherein the carbonaceous precursor in step (a) is MDF (medium density fibreboard).
18. The method of clause 16 or clause 17, wherein the carbonaceous precursor undergoes pyrolysis in step (b) at a temperature of at least 500 °C, or, from 500 to 1100 °C, or, from 600 to 800 °C, or, at 750 °C.
19. The method of any of clauses 16 to 18, wherein the carbonaceous precursor undergoes pyrolysis in step (b) for from 10 to 120 minutes, or, from 15 to 60 minutes, or, from 20 to 40 minutes, or, 30 minutes.
20. The method of any of clauses 16 to 19, wherein the binder in step (c) is one or more sugars; optionally, wherein the one or more sugars is an inverted sugar; optionally, wherein the one or more sugars is sourced from sugar cane molasses.
21. The method of any of clauses 16 to 20, wherein the solid intermediate product and the binder are mixed in step (d) in the presence of water; optionally, wherein the ratio of binder, water and solid intermediate product is 30:30:100 of respectively.
22. The method of any of clauses 16 to 21, wherein the carbonised carbon composition undergoes pelletisation.
23. A method of forming the activated carbon of any of clauses 7 to 15, the method comprising the steps of:
   (a) to (d) of any of clauses 16 to 22; and
   (e) subjecting the carbonised carbon composition from (d) to activation to form the activated carbon.
24. The method of clause 23, wherein the carbonised carbon composition undergoes activation in step (e) at a temperature of at least 800 °C, or, at least 900 °C, or, at least 950 °C, or, from 800 to 1100 °C, or, from 900 to 1100 °C, or, from 950 to 1100 °C.
25. The method of clause 23 or clause 24, wherein the carbonised carbon composition undergoes activation in step (e) for from 10 to 120 minutes, or, from 15 to 60 minutes, or, from 20 to 40 minutes, or, 30 minutes.
26. The method of any of clauses 23 to 25, wherein the carbonised carbon composition is exposed to steam during activation in step (e), wherein the ratio of steam to the carbonised carbon composition is from 1:50 to 1:1, or, from 1:30 to 1:20, or, 1:25; optionally, wherein the steam is water.
27. The method of any of clauses 23 to 26, wherein the activated carbon undergoes granulation or pulverisation.
28. The activated carbon of any of clauses 7 to 15 for use as a catalytic chemical activity enhancer; optionally, wherein the chemical activity is hydrogen peroxide decomposition, oxidative dehydrogenation of alkane and alkyl compounds, dehydration and dehydration of alcohols, oxidation of acid gases such as nitrous oxides (NOx), sulfureous oxides (SOx), hydrogen sulfide (H₂S) and mixtures thereof, dehalogenation and dehydrohalogenation of organo-halogen compounds, catalytic decomposition of ozone and/or catalytic wet air oxidation of phenol or pharmaceutical compounds.

### DETAILED DESCRIPTION

Embodiments of the invention are described below with reference to the accompanying drawings. The accompanying drawings illustrate various embodiments of systems, methods, and embodiments of various other aspects of the disclosure. Any person with ordinary skills in the art will appreciate that the illustrated element boundaries (e.g., boxes, groups of boxes, or other shapes) in the figures represent one example of the boundaries. It may be that in some examples one element may be designed as multiple elements or that multiple elements may be designed as one element. In some examples, an element shown as an internal component of one element may be implemented as an external component in another and vice versa. Furthermore, elements may not be drawn to scale. Non-limiting and non-exhaustive descriptions are described with reference to the following drawings. The components in the figures are not necessarily to scale, emphasis instead being placed upon illustrating principles.
Figure 1 is a schematic depicting the process of forming the activated carbon of the present invention according to Example 2.
Figure 2 shows images of powdered activated carbon (PAC), granular activated carbon (GAC) and extruded activated carbon (EAC).

Embodiments of the present disclosure will be described more fully hereinafter with reference to the accompanying drawings in which like numerals represent like elements throughout the several figures, and in which example embodiments are shown. Embodiments of the claims may, however, be embodied in many different forms and should not be construed as limited to the embodiments set forth herein.

The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present disclosure, the preferred systems and methods are now described.

Some of the terms used to describe the present invention are set out below:
"Activation" refers to the process of subjecting a carbonaceous material to physical and/or chemical activation. Physical activation includes exposing the carbonaceous material to a temperature of at least 800 °C. Chemical activation includes exposing the carbonaceous material to chemicals such as, but not limited to, phosphoric acid at temperatures less than 800 °C.

"Activated carbon" refers to a porous form of carbon that has a high surface area relative to non-activated carbon, wherein the surface of the activated carbon is characterised by microscopic pores. Typically, the high surface area of activated carbon is taken by those skilled in the art to be greater than 400 m²/g. Typically, the porosity of activated carbon is taken by those skilled in the art to mean a porosity of greater than 0.2 ml/g. Activated carbon is usually produced by pyrolysis (carbonization) and activation, wherein activation is either physical (such as high temperatures) or chemical (such as exposure to phosphoric acid).

"Carbonised carbon" refers to a form of carbon that has undergone pyrolysis (carbonization).

"Extruded activated carbon" or "EAC" refers to activated carbon that has been extruded. Typically, the activated carbon has an average particle diameter of from 0.7 to 150 mm and a particle length of from 0.7 to 150 mm. In some examples, the EAC may have a honeycomb structure.

"Granular activated carbon" or "GAC" refers to activated carbon in granular form. Typically, the activated carbon has an average particle diameter of greater than 0.297 mm, or, from 0.60 to 2.36 mm (8 to 30 Mesh).

"Hydrogen peroxide decomposition rate parameter" or "T_{1/4}" refers to the time taken for 25 percent conversion of hydrogen peroxide to oxygen and water.

"Inverted sugar" refers to a sugar syrup, wherein at least some of the sucrose present in the sugar syrup has undergone hydrolysis to form glucose and fructose. An equimolar mixture of glucose and fructose is formed. To form the inverted sugar, sucrose is hydrolyzed by exposure to an acid, such as citric acid (sourced from, for example, lemon juice) and heat. The optical rotation of inverted sugar is opposite to that of the original sugar. The use of inverted sugar in the formation of the activated carbon advantageously provides mechanical strength and abrasion resistance.

"Powdered activated carbon" or "PAC" refers to activated carbon in powder form. Typically, when the PAC is in the form of flakes, the PAC has an average particle diameter of 5 mm. Typically, when the PAC is in the form of a powder formed by milling, the PAC has an average particle diameter of less than 0.297 mm, or, less than 100 µm.

"Pyrolysis" refers to the heating of an organic material, such as carbonaceous precursors, in the absence of oxygen. Typically, heating occurs at temperatures of from 500 to 1100 °C.

"Sugar" refers to any carbohydrate having the general formula of Cₙ(H₂O)ₙ. Examples of sugars include, but are not limited to, monosaccharides such as glucose, fructose and/or combinations thereof, and/or, disaccharides such as sucrose, lactose, maltose and/or combinations thereof.

### Carbonised carbon composition

In some examples of the present invention, a carbonised carbon composition is provided. The carbonised carbon composition preferably comprises carbonised carbon, at least one binder, and at least one alkali metal and/or at least one alkali earth metal.

In some examples of the present invention, the binder is tar.

In some examples of the present invention, the binder is one or more sugars.

Optionally, one or more of the sugars is completely or partially inverted sugar(s).

Optionally, one or more of the sugars is monosaccharides, disaccharides,
oligosaccharides and/or mixtures thereof. Further optionally, the one or more sugars is fructose, glucose, sucrose, maltose, lactose, dextrose, galactose and/or mixtures thereof.

Optionally, the one or more sugars is sourced from sugar cane molasses, sugar beet molasses, fruits (such as but not limited to mangoes, grapes, cherries, pears, canned pears, watermelons, bananas, avocados, raspberries, apples, coconuts, sweet peas, sweet corn, peaches, mangoes, dates and oranges), vegetables (such as but not limited to carrots, beetroot, tomatoes and pumpkins), agave, corn syrup, rice syrup, brown rice syrup, maple syrup, honey and/or mixtures thereof. Preferably, one or more of the sugars is sourced from sugar cane molasses.

In some examples of the present invention, the carbonised carbon composition comprises the one or more sugars at from 15 to 35, or, from 20 to 30, or, at 25 weight percent of the total weight of the carbonised carbon composition.

In some examples of the present invention, the carbonised carbon is obtained from carbonising a carbonaceous precursor. Optionally, wherein the carbonaceous precursor is MDF (medium-density fibreboard), particle board, chipboard, melamine (urea) formaldehyde, polyacrylonitrile (PAN), grain products, fruit pits, palm fronds, nutshells, wood, coconut shell, peat, coir, lignite, coal, petroleum pitch and/or mixtures thereof. Preferably, the carbonaceous precursor is MDF.

In some examples of the present invention, the carbonised carbon composition comprises the activated carbon at from 50 to 85, or, from 60 to 80, or, greater than 65, or greater than 70, or, less than, or, less than 65 weight percent of the total weight of the carbonised carbon composition.

In some examples of the present invention, the binder is one or more sugars sourced from sugar cane molasses and the carbonised carbon is obtained from carbonising MDF.

In some examples of the present invention, the carbonised carbon composition further comprises at least one alkali metal and/or at least one alkali earth metal.

Optionally, the at least one alkali metal and/or at least one alkali earth metal is potassium.

In some examples of the present invention, the at least one alkali metal and/or at least one alkali earth metal is sourced from the source of the binder, and/or, the source of the carbonised carbon, and/or, additive chemicals including, but not limited to, chloride, sulfate, carbonate and/or nitrate salts of the alkali metal and/or alkali earth metal, and/or, combinations thereof. Optionally, the at least one alkali metal and/or at least one alkali earth metal is sourced from sugar cane molasses and/or MDF.

In some examples of the present invention, the carbonised carbon composition comprises the alkali metal and/or at least one alkali earth metal at from 0.01 to 15, or, from 0.05 to 12, or, from 0.01 to 10 weight percent of the total weight of the carbonised carbon composition.

In some examples of the present invention, the carbonised carbon composition comprises carbonised carbon, at least one binder that is tar and at least one alkali metal and/or at least one alkali earth metal that is potassium. Optionally, the carbonised carbon is MDF.

In some examples of the present invention, the carbonised carbon composition comprises carbonised carbon, at least one binder that is one or more sugars and at least one alkali metal and/or at least one alkali earth metal that is potassium. Optionally, the carbonised carbon is MDF.

### Activated carbon

In some examples of the present invention, an activated carbon is provided.

In some examples of the present invention, the activated carbon comprises nitrogen at from 0.50 to 5.0 weight percent of the total weight of the activated carbon, carbon at from 70.00 to 95.00 weight percent of the total weight of the activated carbon, hydrogen at from 0.00 to 1.50 weight percent of the total weight of the activated carbon, sulfur at from 0.00 to 1.00 weight percent of the total weight of the activated carbon and oxygen at from 1.00 to 6.00 weight percent of the total weight of the activated carbon, any balance being unavoidable impurities.

Optionally, the activated carbon comprises nitrogen at from 1.50 to 3.00 or, 1.93 weight percent of the total weight of the activated carbon. In some examples of the present invention, the activated carbon comprises carbon at from 75.00 to 90.00, or, 84.19 weight percent of the total weight of the activated carbon. In some examples of the present invention, the activated carbon comprises hydrogen at from 0.20 to 1.00, or, 0.46 weight percent of the total weight of the activated carbon. In some examples of the present invention, the activated carbon comprises sulfur at from 0.10 to 0.50, or, 0.17 weight percent of the total weight of the activated carbon. In some examples of the present invention, the activated carbon comprises oxygen at from 3.50 to 5.50, or, 4.27 weight percent of the total weight of the activated carbon, any balance being unavoidable impurities.

Optionally, the activated carbon comprises nitrogen at 1.93 weight percent of the total weight of the activated carbon, carbon at 84.19 weight percent of the total weight of the activated carbon, hydrogen at 0.46 weight percent of the total weight of the activated carbon, sulfur at 0.17 weight percent of the total weight of the activated carbon and oxygen at 4.27 weight percent of the total weight of the activated carbon, any balance being unavoidable impurities.

In some examples of the present invention, the activated carbon has a minimum hydrogen peroxide decomposition time (T_{1/4}) of less than 45 minutes, or, less than 40 minutes, or, less than 35 minutes, or, less than 30 minutes, or, less than 25 minutes, or, less than 20 minutes.

In some examples of the present invention, the activated carbon has a surface area analysis (BET) of from 1500 m²/g or less, or, from 1000 m²/g or less, or, from 800 to 1000 m²/g.

In some examples of the present invention, the activated carbon has a minimum iodine number of less than 1500 mgI₂/g, or, less than 1000 mgI₂/g, or, less than 980 mgI₂/g, or, less than 975 mgI₂/g. Iodine number measures the degree of activation of the activated carbon by being linked to the total porosity of the activated carbon.

In some examples of the present invention, the activated carbon has a methylene blue (MB) number of from 5 to 25 gMB/100g, or, from 10 to 20 gMB/100g, or, from 10.5 to 18.3 gMB/100g.

In some examples of the present invention, the activated carbon has an apparent density of from 200 to 650 kg/m³, or 300 to 550 kg/m³, or, from 400 to 550 kg/m³, or, from 419 to 458 kg/m³.

In some examples of the present invention, the activated carbon has a ball pan hardness of less than or equal to 98 %, or, less than or equal to 95 %, or, less than or equal to 90 %, or, from 70 to 95 %, or, from 85 to 90 %.

In some examples of the present invention, the activated carbon is in the form of a powder (powdered activated carbon PAC), granules (granular activated carbon GAC), extrudate (extrudate activated carboned EAC), and/or, combinations thereof. Optionally, the PAC, GAC and/or EAC have spherical, cylindrical and/or irregular shape.

In some examples of the present invention the activated carbon has a spherical, cylindrical and/or irregular shape.

### Method of producing the carbonised carbon composition

In some examples of the present invention, the carbonised carbon composition is produced by a method that comprises the following steps:
(a) providing a carbonaceous precursor;
(b) subjecting the carbonaceous precursor to pyrolysis to form a solid intermediate product;
(c) providing a binder; and
(d) mixing the solid intermediate product with the binder to form the carbonised carbon composition.

In some examples, the carbonaceous precursor in step (a) is MDF (medium-density fibreboard), particle board, chipboard, melamine (urea) formaldehyde, polyacrylonitrile (PAN), grain products, fruit pits, palm fronds, nutshells, wood, coconut shell, peat, coir, lignite, coal, petroleum pitch and/or mixtures thereof. Preferably, the carbonaceous precursor is MDF.

In some examples of the present invention, the carbonaceous precursor undergoes pyrolysis in step (b) by being subjected to heat in the absence of oxygen in a first furnace. Optionally, the temperature of the heat is at least 500 °C, or, from 500 to 1100 °C, or, from 600 to 800 °C, or, at 750 °C. Optionally, the time of pyrolysis is from 10 to 120 minutes, or, from 15 to 60 minutes, or, from 20 to 40 minutes, or, 30 minutes. Preferably, the temperature of the heat is 750 °C and the time of pyrolysis is 30 minutes.

During the pyrolysis, a first waste gas and the solid intermediate product are formed.

Optionally, the first waste gas is evacuated from the first furnace by being evacuated through the solid intermediate product. By evacuating the first waste gas through the solid intermediate product, the solid intermediate product is loaded with nitrogen from the first waste gas thereby increasing the nitrogen content of the solid intermediate product. The first furnace may comprise a through-hole through which the first waste gas is evacuated. Optionally, the solid intermediate product is piled up in front of the through-hole prior to the first waste gas being evacuated. By piling the solid intermediate product in front of the through-hole of the first furnace, more of the solid intermediate product is exposed to the first waste gas as it is evacuated from the first furnace thereby increasing the nitrogen content of the solid intermediate product. Once the first waste gas has passed through the solid intermediate product, the first waste gas is evacuated from the first furnace and may be recuperated as a fuel gas in downstream processes.

In some examples of the present invention, the solid intermediate product is removed from the first furnace prior to mixing with the binder.

In some examples of the present invention, the solid intermediate product is milled so as to be in the form of a powder prior to mixing with the binder.

In some examples of the present invention, the binder in step (c) is one or more sugars. Optionally, the one or more sugars is partially or completely inverted sugar(s). Optionally, the one or more sugars is monosaccharides, disaccharides, oligosaccharides and/or mixtures thereof. Further optionally, the one or more sugars is fructose, glucose, sucrose, maltose, dextrose, galactose and/or mixtures thereof. Optionally, the one or more sugars is sourced from sugar cane molasses, sugar beet molasses, fruits (such as but not limited to mangoes, grapes, cherries, pears, canned pears, watermelons, bananas, avocados, raspberries, apples, coconuts, sweet peas, sweet corn, peaches, mangoes, dates and oranges), vegetables (such as but not limited to carrots, beetroot, tomatoes and pumpkins), agave, corn syrup, rice syrup, brown rice syrup, maple syrup, honey and/or mixtures thereof. Preferably, the one or more sugars is sourced from sugar cane molasses.

In some examples of the present invention, the solid intermediate product and binder are mixed in step (d) in the presence of water. Optionally, at a ratio of 30:30:100 of binder, water and activated carbon respectively. Upon mixing, the carbonised carbon composition is formed.

In some examples of the present invention, the carbonised carbon composition is pelletised and/or granulised. Optionally, the carbonised carbon composition is pelletised by being passed through a pelletiser.

In some examples of the present invention, the carbonised carbon composition is baked. Optionally, the carbonised carbon composition is baked for from 10 to 120 minutes, or, from 20 to 60 minutes, or, 30 minutes. Optionally, the carbonised carbon composition is baked at steps until a final temperature is achieved. Optionally, the carbonised carbon composition is baked once, two times, three times, or, four times. Optionally, the carbonised carbon composition is first baked at steps until a temperature of from 250 to 750 °C, or, from 300 to 600 °C, or, at 350 °C is achieved. Optionally, the carbonised carbon composition is baked for a second time at steps until a final temperature of from 400 to 800 °C, or, from 500 to 700 °C, or at 600 °C is achieved.

Optionally, the carbonised carbon composition passes through a pelletiser and is then baked. Optionally, the carbonised carbon composition passes through a pelletiser and is then baked for 30 minutes and at steps until a final temperature of 350 °C is achieved and then baked again for 30 minutes and at steps until a final temperature of 600 °C is achieved.

### Method of producing the activated carbon

In some examples of the present invention, the activated carbon is produced by a method that comprises the following steps:
(a) to (d) as set out above under the heading "Method of producing the carbonised carbon composition"; and
(e) subjecting the carbonised carbon composition from (d) to activation to form the activated carbon.

In some examples of the present invention, the carbonised carbon composition passes to a second furnace for activation.

In some examples of the present invention, the carbonised carbon composition undergoes physical or chemical activation in step (e). Physical activation includes exposing the carbonised carbon composition to a temperature of at least 800 °C. Chemical activation includes exposing the carbonised carbon composition to chemicals such as, but not limited to, phosphoric acid at temperatures less than 800 °C. Preferably, the carbonised carbon composition undergoes physical activation.

In some examples of the present invention, the carbonised carbon composition undergoes activation in step (e) by being subjected to heat in the second furnace in step (e).

Optionally, the temperature of the heat is at least 800 °C, or, at least 900 °C, or, at least 950 °C, or, from 800 to 1100 °C, or, from 900 to 1100 °C, or, from 950 to 1100 °C. Optionally, the time of activation is from 10 to 120 minutes, or, from 15 to 60 minutes, or, from 20 to 40 minutes, or, 30 minutes. Optionally, the carbonised carbon composition is exposed to steam during activation, wherein the ratio of steam to the carbonised carbon composition is from 1:50 to 1:1, or, from 1:30 to 1:20, or, 1:25. Optionally, the steam is water. Preferably, the temperature of the heat is 950 °C, the time of activation is 30 minutes and activation occurs in the presence of steam wherein the ratio of steam to the mixture is from 1:25.

During the activation, a second waste gas and the activated carbon are formed. Optionally, the second waste gas is evacuated from the second furnace by being evacuated through the activated carbon. By evacuating the second waste gas through the activated carbon, the activated carbon is loaded with nitrogen from the second waste gas thereby increasing the nitrogen content of the activated carbon. The second furnace may comprise a through-hole through which the second waste gas is evacuated. Optionally, the activated carbon is piled up in front of the through-hole prior to the second waste gas being evacuated. By piling the activated carbon in front of the through-hole of the second furnace, more of the activated carbon is exposed to the second waste gas as it is evacuated from the second furnace thereby increasing the nitrogen content of the activated carbon. Once the second waste gas has passed through the activated carbon, the second waste gas is evacuated from the second furnace and may be recuperated as a fuel gas in downstream processes.

In some examples of the present invention, the activated carbon is additionally exposed to an oxidizing gas during activation in step (e). The oxidizing gas may be carbon oxide (CO) and/or carbon dioxide (CO₂).

In some examples of the present invention, the carbonaceous precursor, solid intermediate product, carbonised carbon composition and/or the activated carbon are moved through the first and/or second furnaces by using a plurality of rollers or any other suitable suspension system arranged such that the carbonaceous precursor, solid intermediate product, carbonised carbon composition and/or the activated carbon move continuously through the first and/or second furnace.

In some examples of the present invention, the first furnace is the second furnace.

In some examples of the present invention, the first furnace and/or the second furnace are rotary kilns.

In some examples of the present invention, the activated carbon is further baked. Optionally, the temperature of baking is from 200 to 750 °C, or, from 300 to 400 °C, or, 350 °C.

In some examples of the present invention, the activated carbon is further processed, such as pelletisation to obtain an extruded activated carbon (EAC) or granular activated carbon (GAC).

In some examples of the present invention, the activated carbon is further processed, such as pulverisation to obtain a powdered activated carbon (PAC). Optionally, pulverisation can be carried out by milling.

### Uses of the activated carbon

In some examples of the present invention, the activated carbon is for use as a catalytic chemical activity enhancer.

In particular, the activated carbon is for use as a catalytic chemical activity enhancer wherein the chemical activity is hydrogen peroxide decomposition, oxidative dehydrogenation of alkane and alkyl compounds, dehydration and dehydration of alcohols, oxidation of acid gases such as nitrous oxides (NOx), sulfureous oxides (SOx), hydrogen sulfide (H₂S) and mixtures thereof, dehalogenation and dehydrohalogenation of organo-halogen compounds, catalytic decomposition of ozone and/or catalytic wet air oxidation of phenol or pharmaceutical compounds.

### EXAMPLES

The following are non-limiting examples that discuss, with reference to tables and figures, the advantages of the present invention. The examples set forth herein are merely examples among other possible examples.

### Example 1: Forming comparative powdered activated carbon (PAC)

In this non-limiting example, five comparative powdered activated carbon (PAC) samples and one comparative extruded activated carbon (EAC) samples were formed. The PAC and EAC samples produced in this non-limiting example are comparative samples.

The PAC comparative samples were formed from four different carbonaceous precursors. The four different carbonaceous precursors were called "MDF HB", "MDF F", "MDF O" and "MDF L1".

A fifth activated carbon was used. The fifth activated carbon was obtained from Norit Nederland B.V. ("Norit RST3") and is an activated carbon regularly used in the field of activated carbon. EAC6 is sourced in a form ready for use.

The composition of the comparative PAC and EAC samples is set out in Table 1.

**Table 1: The composition of the comparative PAC and EAC samples according to the present invention.**

| **Sample** | **Carbon precursor** | **Binder** |
|---|---|---|
| PAC 1 | MDF HB | None |
| PAC2 | MDF F | None |
| PAC3 | MDF O | None |
| PAC4 | MDF L1 | None |
| PAC5 | MDF HB | None |
| EAC6 | Norit RST3 | Unknown binder |

All of the comparative PAC samples were produced separately by the same process. The process of producing the comparative PAC samples is set out below.
1. The carbonaceous precursor was added to an oven and heated at 750 °C for 30 minutes. Any oven can be used. In this non-limiting example, a Nabertherm rotary oven was used (model RSRC 120 1000/11). During the heating, the carbonaceous precursor underwent pyrolysis to form char flakes.
2. The char flakes were retained in the oven.
3. The char flakes were activated by heating the char flakes at 950 °C in the presence of steam for 30 minutes, wherein the ratio of char flakes to steam was 1:25. During heating, the char flakes underwent activation to form activated char.
4. The activated char was milled in a grinder to form activated char in the form of a powder. Any grinder can be used, in this non-limiting example a grinder from JM machines custom converted from a shredder machine type AM2018/200 was used.

### Example 2: Forming extrudate activated carbon (EAC) according to the present invention

In this non-limiting reference example, five extruded activated carbon (EAC) samples according to the present invention were formed.

The EAC samples were formed from four different carbonaceous precursors. The source of the carbonaceous precursors is the same as for example 1.

The carbonaceous precursors were combined with a binder, wherein the binder was sugar sourced from sugar cane molasses. An EAC sample was made with the well-known binder, ammonium lignosulfonate, as a comparative example.

The composition of the EAC samples is set out in Table 2.

**Table 2: The composition of the EAC samples according to the present invention.**

| **Sample** | **Carbon precursor** | **Binder** |
|---|---|---|
| EAC1 | MDF HB | Sugar |
| EAC2 | MDF F | Sugar |
| EAC3 | MDF O | Sugar |
| EAC4 | MDF L1 | Sugar |
| EAC5 | MDF HB | Ammonium lignosulfonate |

The composition of the sugar in samples EAC1 to EAC4 is set out in Table 3. The sugar provided the alkali earth and alkali metals.

**Table 3: The composition of the sugar in samples EAC1 to EAC4.**

| **Elements** | **Composition (% m/m)** |
|---|---|
| Dry matter | 75 |
| Total sugars | 45 - 50 |
| Inverted sugar | 15 - 18 |
| Carbon | 22 |
| Protein | 4,0 - 5,0 |
| Potassium | 4,0 |
| Phosphorus | 0,1 |
| Chlorine | 1,3 |
| Sodium | 0,1 |
| Calcium | 0,1 |
| Sulfur | 0,5 |
| Sulfate | 1,5 |
| Magnesium | 0,5 |
| Ash | 10 - 12 |

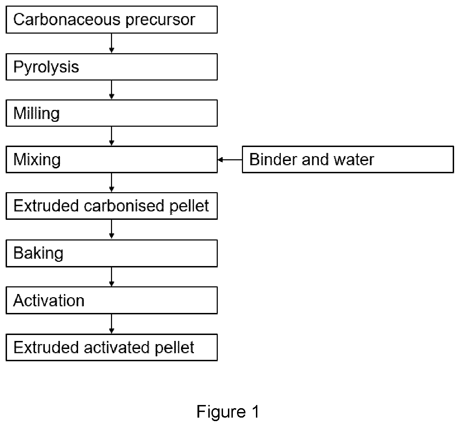

All of the EAC samples were produced by the same method. The method of producing the EAC samples is set out below and is depicted in Figure 1.
1. The carbonaceous precursor was added to an oven and heated at 750 °C for 30 minutes. Any oven can be used. In this non-limiting example, a Nabertherm rotary oven was used (model RSRC 120 1000/11). Upon heating, the carbonaceous precursor underwent pyrolysis to forming char flakes.
2. The char flakes were removed from the oven and milled in a grinder to form powdered char flakes. Any grinder can be used, in this non-limiting example a grinder from JM machines custom converted from a shredder machine type AM2018/200 was used.
3. The powdered char flakes were mixed with the binder and water to form a mixture. For each sample, 30 g of binder and 30 g of water were added for every 100 g of powdered char flakes. Any mixer can be used. In this non-limiting example, a mixer from DOMO was used. Mixing was performed until a uniform mixture was formed.
4. The mixture was extruded through a pelletiser to form extruded pellets. Any pelletiser can be used. In this non-limiting example, a flat die pellet mill (make KL 120C with 4 mm diameter mold) was used.
5. The extruded pellets were placed in an oven and baked (a) for 30 minutes and at steps until a final temperature of 350 °C is achieved and then (b) for 30 minutes and at steps until a final temperature of 600 °C is achieved to form baked pellets. Any oven can be used. In this non-limiting example, a Nabertherm rotary oven was used (model RSRC 1201000/11).
6. The baked pellets were retained in the oven and activated by heating the baked pellets at 950 °C in the presence of steam for 30 minutes, wherein the ratio of baked pellets to steam was 1:25. During the heating, the baked pellets underwent activation to form activated pellets.
7. The activated pellets underwent pelletisation to form extruded activated carbon (EAC) that comprised the activated carbon of the present invention. Any pelletiser can be used. In this non-limiting example, a flat die pellet mill (make KL 120C with 4 mm diameter mold) was used.

### Example 3: Images of powdered activated carbon (PAC), granular activated carbon (GAC) and extruded activated carbon (EAC)

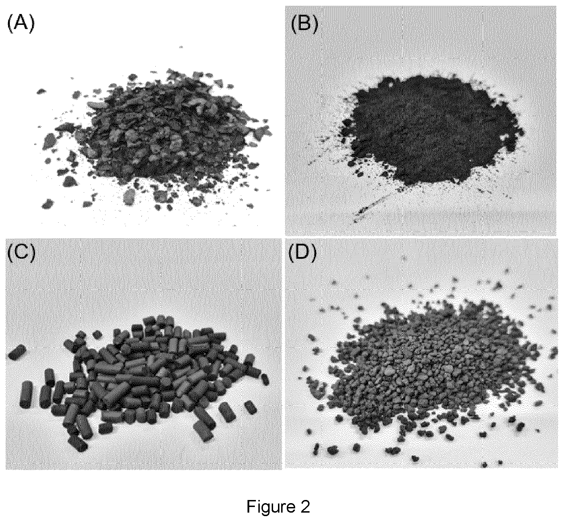

In this non-limiting example, images of the activated carbon as a powdered activated carbon (PAC), granular activated carbon (GAC) and extruded activated carbon (EAC) were taken. The images can be obtained through the use of a camera. In this non-limiting example, a camera on a phone was used to obtain the images. The images of the activated carbon are shown in Figure 2.

Image (A) in Figure 2 shows powdered activated carbon (PAC) in the form of flakes. The diameter of the PAC is 5 mm.

Image (B) in Figure 2 shows powdered activated carbon (PAC) that was milled to form the PAC. The diameter of the PAC is less than 100 µm.

Image (C) in Figure 2 shows extruded activated carbon (EAC). The average diameter of the EAC is 4 mm and the length is from 2 to 8 mm.

Image (D) in Figure 2 shows granular activated carbon (GAC). The average diameter of the GAC is 8-30 Mesh (2.36 to 0.60 mm).

### Example 4: Measuring the catalytic activity of the comparative PAC and EAC samples from Example 1 and the EAC samples from Example 2 according to the present invention

In this non-limiting example, the catalytic activity of the PAC and the EAC samples as made in Examples 1 and 2 was measured. The catalytic activity was determined by measuring the hydrogen peroxide decomposition rate parameter (T_{1/4}) for each sample.

The catalytic activity of the PAC and EAC samples was measured for each sample separately. Firstly, 150 mg of one of the PAC or EAC samples was dispersed in 100 ml deionized water and phosphate buffer solution (50 ml, 0.5 mol K₂HPO₄, 0.5 mol KH₂PO₄) to form a dispersion. The dispersion was then heated to 60°C in a water bath whilst stirring. Once the dispersion reached a temperature of 60°C, hydrogen peroxide (50 ml of 35% peroxide) was added to the dispersion. Addition of hydrogen peroxide started the decomposition reaction. The volume of oxygen that evolved as a function of time was measured to provide the hydrogen peroxide decomposition rate parameter (T_{1/4}). In this non-limiting example, the hydrogen peroxide decomposition rate parameter was the time taken for 1.75 m³ of oxygen gas to be formed.

The volume of oxygen that evolved over time was measured by leading the oxygen formed though an outlet tube into a graduated 100 ml cylinder tube turned upside and filled with water. The oxygen pushed the water out of the cylinder. By switching the outlet tube to a second cylinder, volume measurement can be executed whilst noting the time of the switch. Switching the outlet tube between the two cylinders was done until a total sum of 1.75 m³ of oxygen was measured. The total time to reach 1.75 m³ of oxygen is the hydrogen peroxide decomposition time.

Table 4 shows the decomposition rate parameter (T_{1/4}) for the PAC samples and EAC samples.

**Table 4: The decomposition rate parameter (T_{1/4}) for the PAC and EAC samples.**

| **Sample** | **Decomposition rate parameter (T_{1/4}) (min)** | **Sample** | **Decomposition rate parameter (T_{1/4}) (min)** |
|---|---|---|---|
| PAC1 | 99 | EAC1 | <5 |
| PAC2 | 101 | EAC2 | 5 |
| PAC3 | 103 | EAC3 | 14 |
| PAC4 | 123 | EAC4 | <5 |
| PAC5 | 99 | EAC5 | 81 |
| EAC6 | 45 | / | / |

From comparing PAC1 to PAC4 with EAC1 to EAC4 (respectively), the data in Table 3 clearly shows that for samples containing a binder, the decomposition rate parameter is considerably lower. This demonstrates that when the activated carbon is formed from a carbonised carbon composition that comprised a binder, the decomposition rate parameter is advantageously increased.

Furthermore, from comparing EAC1 to EAC4 with EAC5, the data in Table 3 clearly shows that for samples containing sugar as the binder, the decomposition rate parameter is considerably lower. This demonstrates that when the activated carbon is formed from a carbonised carbon composition that comprised sugar as the binder, the decomposition rate parameter is advantageously increased compared to activated carbon formed from carbonised carbon and known binders.

Furthermore, from comparing EAC1 to EAC4 with EAC6, the data in Table 3 clearly shows that for samples containing sugar as the binder, the rate parameter is considerably lower. This demonstrates that when activated carbon is formed from a carbonised carbon composition that comprised a binder, the decomposition rate parameter is advantageously increased compared to that of a known activated carbon formed from carbonised carbon (without a binder).

### Example 5: Further characterising the activated carbon samples

In this non-limiting example of the present invention, EAC1 to EAC5 and EAC6 samples were characterised by measuring the iodine number, methylene blue number, apparent density, ball pan hardness and specific surface area (S_{BET}). Table 5 sets out the results of the characterisation.

The iodine number (IN) was measured using ASTM, according to ASTM D4607-14.

The methyl blue number (MBN) was measured using methylene blue in titration. The method of measuring the methyl blue number (MBN) followed the methyl blue capacity test standardised by the European Council of Chemical Manufacturers Federation (CEFIC).

The apparent density (*ρ_{b}*) was measured using ASTM, according to ASTM D2854-09.

The ball pan hardness (BPN) was measured using ASTM, according to ASTM 3802-23.

The specific surface area (S_{BET}) was measured by gas adsorption, using an ISO method, according to ISO 9277:10.

**Table 5: The iodine number, methylene blue number, apparent density, ball pan hardness and BET surface of the EAC samples and PAC6.**

| **Sample** | **IN (mg I₂/g)** | **MBN (g B /100 g AC)** | ***ρ_{b}* (kg/m³)** | **BPN (%)** | **S_{BET} (Argon, m²/g)** | **S_{BET} (Nitrogen, m²/g)** |
|---|---|---|---|---|---|---|
| EAC1 | 975 | 14.5 | 458 | 85-90 | 849 | 822 |
| EAC2 | 928 | 11.4 | 441 | 85-90 | 848 | 849 |
| EAC3 | 764 | 18.3 | / | 85-90 | / | / |
| EAC4 | 797 | 12.3 | 450 | 85-90 | / | / |
| EAC5 | 866 | 10.5 | 419 | 85-90 | / | / |
| EAC6 | 1024 | 13.6 | 430 | 98.5 | 1117 | 1053 |

Advantageously, EAC is made of activated carbon retained together by the addition of a binder. The carbonised carbon and binder undergo pelletisation to produce larger granules having typically spherical, cylindrical and/or irregular shape. The presence of the binder advantageously binds the carbonised carbon together to provide the desired mechanical strength and stability required for the granule to withstand the crushing and abrasion the granule is exposed to during activation and post activation (for example in transport). Activation advantageously forms free spaces in the granule.

Further advantageously, the use of a binder (such as one or more sugars) leads to the formation of a more disordered heterogeneous carbon matrix during the activation step. This advantageously results in surface exposure of functional groups and electron-rich centres, which cause the resultant activated carbon to have a high catalytic activity.

### Example 6: Measuring the elemental composition of the samples

In this non-limiting example, the elemental composition of EAC1 and EAC6 was measured.

The elemental composition of the EAC1 and EAC6 samples was separately measured using a FlashEA 1112 CHNS/O Automatic Element Analyzer. For each sample, each sample was separately milled to a fine powder with a pestle and mortar. The fine powder was dried by heating in a lab furnace (in this non-limiting example the lab furnace was Hereaus T6030) at 130°C for three hours. The proportion of carbon (C), hydrogen (H), nitrogen (N) and sulfur (S) was measured in an element analyser for a first sample of the EAC sample. A second, fresh, sample of the same EAC sample was then prepared in the same way and the proportion of oxygen (O) measured. The results are shown in Table 6.

**Table 6: The elemental composition of EAC1 and PAC6.**

| **Sample** | **N** | **C** | **H** | **S** | **O** |
|---|---|---|---|---|---|
| EAC1 | 1.93 | 84.19 | 0.46 | 0.17 | 4.27 |
| EAC6 | 0.36 | 89.19 | 0.1 | 0.72 | 4.48 |

The remaining weight percent of EAC1 and EAC6 is unavoidable impurities.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilized for realizing the invention in diverse forms thereof.

Although certain example aspects of the invention have been described, the scope of the appended claims is not intended to be limited solely to these examples. The claims are to be construed literally, purposively, and/or to encompass equivalents.

## Claims

1. A carbonised carbon composition, comprising:
carbonised carbon,
at least one binder; and
at least one alkali metal and/or at least one alkali earth metal
wherein the binder is one or more sugars.

2. The carbonised carbon composition of claim 1, wherein the at least one alkali metal and/or at least one alkali earth metal is potassium; and/or,
wherein the one or more sugars is partially or completely inverted sugar.

3. The carbonised carbon composition of any of claim 1 or claim 2, wherein the one or more sugars is sourced from sugar cane molasses; and/or,
wherein the carbonised carbon is obtained from carbonising a carbonaceous precursor; optionally, wherein the carbonaceous precursor is MDF (medium-density fibreboard).

4. The carbonised carbon composition of any of claims 1 to 3, wherein:
the carbonised carbon is present at from 50 to 85, or, from 60 to 80, or, greater than 65, or, greater than 70, or, less than 80, or, less than 65 weight percent of the total weight of the carbonised carbon composition;
the binder is present at from 15 to 35, or, from 20 to 30, or, at 25 weight percent of the total weight of the carbonised carbon composition; and/or
the alkali metal and/or alkali earth metal is present at from 0.01 to 15, or, from 0.05 to 12, or, from 0.01 to 10 weight percent of the total weight of the carbonised carbon composition.

5. Activated carbon, comprising:
nitrogen at from 0.50 to 5.0 weight percent of the total weight of the activated carbon;
carbon at from 70.00 to 95.00 weight percent of the total weight of the activated carbon;
hydrogen at from 0.00 to 1.50 weight percent of the total weight of the activated carbon;
sulfur at from 0.00 to 1.00 weight percent of the total weight of the activated carbon; and/or
oxygen at from 1.00 to 6.00 weight percent of the total weight of the activated carbon;
any balance being unavoidable impurities.

6. The activated carbon of claim 5, wherein the activated carbon comprises:
nitrogen at from 1.50 to 3.00, or, 1.93 weight percent of the total weight of the activated carbon;
carbon at from 75.00 to 90.00, or, 84.19 weight percent of the total weight of the activated carbon;
hydrogen at from 0.20 to 1.00, or, 0.46 weight percent of the total weight of the activated carbon;
sulfur at from 0.10 to 0.50, or, 0.17 weight percent of the total weight of the activated carbon; and/or
oxygen at from 3.50 to 5.50, or, 4.27 weight percent of the total weight of the activated carbon;
any balance being unavoidable impurities.

7. The activated carbon of claim 5 or claim 6 wherein the activated carbon has a minimum hydrogen peroxide decomposition time (T_{1/4}) of less than 45 minutes, or, less than 40 minutes, or, less than 35 minutes, or, less than 30 minutes, or, less than 25 minutes, or, less than 20 minutes; and/or,
wherein the activated carbon has a surface area analysis (BET) of from 1500 m²/g or less, or, from 1000 m²/g or less, or, from 800 to 1000 m²/g.

8. The activated carbon of any of claims 5 to 7, wherein the activated carbon has an iodine number of less than 1500 mgI₂/g, or, less than 1000 mgI₂/g, or, less than 980 mgI₂/g, or, less than 975 mgI₂/g; and/or,
wherein the activated carbon has a methylene blue (MB) number of from 5 to 25 gMB/100g, or, from 10 to 20 gMB/100g, or, from 10.5 to 18.3 gMB/100g.

9. The activated carbon of any of claims 5 to 8, wherein the activated carbon has an apparent density of from 200 to 650 kg/m³, or 300 to 550 kg/m³, or, from 400 to 550 kg/m³, or, from 419 to 458 kg/m³; and/or,
wherein the activated carbon has a ball pan hardness of less than or equal to 98 %, or, less than or equal to 95 %, or, less than or equal to 90 %, or, from 70 to 95 %, or, from 85 to 90 %.

10. The activated carbon of any of claims 5 to 9, wherein the activated carbon is in the form of an extrudate, powder, granules and/or combinations thereof.

11. A method of forming the carbonised carbon composition of any of claims 1 to 4, the method comprising the steps of:
(a) providing a carbonaceous precursor;
(b) subjecting the carbonaceous precursor to pyrolysis to form a solid intermediate product;
(c) providing a binder; and
(d) mixing the solid intermediate product with the binder to form the carbonised carbon composition.

12. The method of claim 11, wherein the carbonaceous precursor in step (a) is MDF (medium density fibreboard); and/or,
wherein the carbonaceous precursor undergoes pyrolysis in step (b) at a temperature of at least 500 °C, or, from 500 to 1100 °C, or, from 600 to 800 °C, or, at 750 °C; and/or,
wherein the carbonaceous precursor undergoes pyrolysis in step (b) for from 10 to 120 minutes, or, from 15 to 60 minutes, or, from 20 to 40 minutes, or, 30 minutes; and/or,
wherein the binder in step (c) is one or more sugars; optionally, wherein the one or more sugars is an inverted sugar; optionally, wherein the one or more sugars is sourced from sugar cane molasses; and/or,
wherein the solid intermediate product and the binder are mixed in step (d) in the presence of water; optionally, wherein the ratio of binder, water and solid intermediate product is 30:30:100 of respectively; and/or,
wherein the carbonised carbon composition undergoes pelletisation.

13. A method of forming the activated carbon of any of claims 5 to 10, the method comprising the steps of:
(a) to (d) of claim 11 or claim 12; and
(e) subjecting the carbonised carbon composition from (d) to activation to form the activated carbon.

14. The method of claim 13, wherein the carbonised carbon composition undergoes activation in step (e) at a temperature of at least 800 °C, or, at least 900 °C, or, at least 950 °C, or, from 800 to 1100 °C, or, from 900 to 1100 °C, or, from 950 to 1100 °C; and/or,
wherein the carbonised carbon composition undergoes activation in step (e) for from 10 to 120 minutes, or, from 15 to 60 minutes, or, from 20 to 40 minutes, or, 30 minutes; and/or,
wherein the carbonised carbon composition is exposed to steam during activation in step (e), wherein the ratio of steam to the carbonised carbon composition is from 1:50 to 1:1, or, from 1:30 to 1:20, or, 1:25; optionally, wherein the steam is water; and/or,
wherein the activated carbon undergoes granulation or pulverisation.

15. The activated carbon of any of claims 5 to 10 for use as a catalytic chemical activity enhancer; optionally, wherein the chemical activity is hydrogen peroxide decomposition, oxidative dehydrogenation of alkane and alkyl compounds, dehydration and dehydration of alcohols, oxidation of acid gases such as nitrous oxides (NOx), sulfureous oxides (SOx), hydrogen sulfide (H₂S) and mixtures thereof, dehalogenation and dehydrohalogenation of organo-halogen compounds, catalytic decomposition of ozone and/or catalytic wet air oxidation of phenol or pharmaceutical compounds.
